Europäisches Patentamt

**European Patent Office**

Office européen des brevets

(19)

(11) Numéro de publication: **0 008 550**
**B1**

(12) **FASCICULE DE BREVET EUROPEEN**

(45) Date de publication du fascicule du brevet: **21.04.82**

(51) Int. Cl.³: **B 23 K 35/30, B 23 K 35/02**

(21) Numéro de dépôt: **79400549.6**

(22) Date de dépôt: **03.08.79**

(54) **Fil fourré pour le soudage et le rechargement avec dépôt d'un alliage à base de cobalt.**

(30) Priorité: **22.08.78 FR 7824330**
**15.06.79 FR 7915351**

(43) Date de publication de la demande:
**05.03.80 Bulletin 80/5**

(45) Mention de la délivrance du brevet:
**21.04.82 Bulletin 82/16**

(84) Etats contractants désignés:
**AT BE CH DE GB IT LU SE**

(56) Documents cités:
**FR - A - 850 037**
**FR - A - 1 467 800**
**FR - A - 2 282 968**
**FR - A - 2 339 464**
**US - A - 3 091 022**

(73) Titulaire: **IMPHY S.A.**
**8 rue de la Rochefoucauld**
**F-75009 Paris (FR)**

(72) Inventeur: **Vassogne, Jean-Bernard**
**13 rue des Jolys**
**F-58160 Imphy (FR)**
Inventeur: **Plumensi, Jean-Pierre**
**7 bis boulevard de la République**
**F-58000 Nevers (FR)**

(74) Mandataire: **Bouget, Lucien et al,**
**CREUSOT-LOIRE 15 rue Pasquier**
**F-75383 Paris Cedex 08 (FR)**

Courier Press, Leamington Spa, England.

Fil fourré pour le soudage et le rechargement
avec dépôt d'un alliage à base de cobalt

L'invention concerne un fil fourré pour le soudage et le rechargement avec dépôt d'un alliage à base de cobalt contenant du chrome.

Les fils fourrés destinés au soudage et au rechargement avec dépôt d'un alliage à base de cobalt, par procédés automatiques ou semi-automatiques, comportent une gaine tubulaire remplie de poudre métallique ou d'un mélange de poudre métallique et de poudre de carbure.

L'enveloppe tubulaire est généralement formée à partir d'un feuillard en alliage comportant une forte proportion de cobalt, supérieure à 90% et la plupart du temps de l'ordre de 93%. Les éléments ajoutés au cobalt pour l'élaboration de cet alliage sont le plus souvent le fer, le nickel, ou le titane qui permettent une stabilisation de la phase cubique à faces centrées du cobalt à température ambiante au détriment de la phase hexagonale. La présence de la phase cubique à faces centrées dont la stabilité à température ambiante est améliorée par les additions des éléments précités, permet en effet d'améliorer l'aptitude au formage à froid de l'alliage pour l'obtention du feuillard, le formage de la gaine tubulaire et son tréfilage éventuel après remplissage de la gaine par le poudre métallique.

Les poudres métalliques sont donc choisies de façon à apporter dans le métal constituant le dépôt, au moment de la fusion du fil fourré, les éléments nécessaires pour ajuster la composition du dépôt à la nuance souhaitée.

En fonction du rapport en poids entre la poudre et l'enveloppe tubulaire dans le fil fourré, on introduit donc dans la gaine un mélange soigneusement dosé de poudre métallique élémentaire ou de poudre de carbure de façon à amener les éléments complémentaires du métal d'apport en quantité souhaitable par rapport au cobalt apporté par l'enveloppe tubulaire (US—A—3 091 022).

Les alliages à base de cobalt et contenant du chrome qu'on désire déposer contiennent le plus souvent à titre d'éléments complémentaires du tungstène, du molybdène, du nickel, du carbone et du silicium. Ces éléments sont incorporés au fil fourré, soit chacun sous forme d'une poudre métallique comportant un élément unique, soit sous forme de composés tels que des carbures. La plus grande partie ou même l'intégralité du cobalt est apportée par la gaine tubulaire qui, lors de sa fusion et de son mélange à l'état liquide avec la poudre fondue, apporte en faible quantité les éléments qui lui ont été ajoutés pour favoriser la formabilité de l'alliage constituant l'enveloppe.

Les poudres métalliques élémentaires telles que la poudre de chrome, de tungstène, de molybdène sont préparées par broyage et de ce fait contiennent une certaine dose d'impuretés par exemple de fer qui s'incorpore aux poudres au moment du broyage. Ces poudres peuvent également contenir une proportion non négligeable de gaz à l'état adsorbé qui constitue une source supplémentaire d'impuretés dans le métal d'apport.

D'autre part, l'utilisation de mélanges de poudres obtenues par broyage est une source de ségrégation dans le fil fourré et donc d'hétérogénéité dans le métal déposé, cette tendance à la ségragation étant d'autant plus forte que les divers constituants du mélange de poudre sont de densités plus éloignées.

On a quelquefois préconisé l'utilisation de poudres pré-alliées à la place de mélanges de poudres élémentaires ou de mélanges de poudres élémentaires et de carbure, mais la composition de ces pré-alliages ne permet pas la production de poudres pré-alliées par pulvérisation de l'alliage à l'état liquide et refroidissement subséquent des particules obtenues. On a alors recours à des pré-alliages obtenus par broyage d'une phase fragile, mélangés à des éléments simples tels que le carbone ou le cobalt ou encore à des carbures (FR—A—2 282 968).

D'autre part, il est avantageux d'obtenir des fils fourrés ayant une gaine mince car ces fils fourrés ont une aptitude à la fusion améliorée. De ce fait, à intensité égale on obtient un taux de dépôt amélioré par rapport à un fil à gaine épaisse et si l'on réduit l'intensité pour conserver le même taux de dépôt, on obtient un échauffement moindre et un taux de dilution plus faible par le métal de base.

Les éléments d'alliage étant apportés par la poudre, pour l'obtention d'un métal déposé correspondant à une nuance donnée, le rapport en poids entre le poudre et la gaine tubulaire est déterminé. Compte-tenu du compactage de la poudre, le rapport volumique entre l'enveloppe tubulaire et la poudre est également déterminé, ce qui fixe l'épaisseur de la gaine tubulaire. La proportion des éléments apportés par la poudre dans les nuances à élaborer est telle, pour les nuances habituellement utilisées, que la proportion en poids de la gaine représente la plupart du temps aux alentours de 65% du poids total du fil fourré. Dans ces conditions, il n'est pas possible d'obtenir un fil fourré ayant une gaine mince, ce qui nuit aux conditions de soudage ou de rechargement.

Le but de l'invention est donc de proposer un fil fourré pour le soudage et le rechargement avec dépôt d'un alliage à base de cobalt contenant au plus 36% de chrome, constitué d'une part d'une gaine en un alliage ductile ayant une teneur en cobalt supérieure à 90% et d'autre part d'une poudre métallique remplissant la gaine tubulaire, le fil fourré possédant une bonne homogénéité de composition, une grande pureté et pouvant être obtenu avec une gaine tubulaire mince.

Dans ce but, la poudre métallique est intégralement formée de grains de composition homogéne renfermant plus de 12% de cobalt, moins de 4,5% de carbone, moins de 3,5% de silicium, 55 à 81% de chrome, 0 à 20% de tungstène, 0 à 14% de molybdène et 0 à 8% de nickel et représente 41 à 50% du poids total du fil fourré, les éléments Cr, W, Mo et Ni n'entrant pas dans la composition de la gaine.

On va maintenant donné à titre d'exemple non limitatif, des compositions d'un fil fourré et plus particulièrement de la poudre constituant l'âme de ce fil, dans le cas où l'on désire déposer des alliages de cobalt correspondant à des nuances habituellement utilisées dans le cas de rechargement de surfaces métalliques.

Exemple 1

dans un premier exemple de réalisation, on a élaboré un fil fourré suivant l'invention pour le dépôt d'un alliage de cobalt comportant sensiblement 65% de cobalt, 4% de tungstène et 30% de chrome. Cette nuance qui correspond sensiblement à l'alliage commercialisé sous la marque STELLITE 6 peut comporter de 1 à 1,25% de carbone, de 1,1 à 1,30% de silicium indépendamment du chrome dont la téneur peut être comprise entre 27 et 30%, du tungstène entre 3,5 et 5,5% et du cobalt constituant le reste de l'alliage à part quelques impuretés inévitables.

On a constitué un fil fourré en utilisant une gaine tubulaire en un alliage cobalt-fer contenant approximativement 93% de cobalt, 6% de fer, une quantité de manganèse inférieure à 1% et de très faible quantitées de carbone, silicium, soufre et phosphore, dans laquelle on introduit en cours de formage, une poudre pré-alliée contenant 57% de chrome, 9% de tungstène, 2,5% de silicium, et 2,5% de carbone, le solde, à l'exception des impuretés inévitables, étant du cobalt.

La poudre a été introduite dans la gaine tubulaire de façon qu'elle représente 50% du poids total du fil fourré.

La poudre a été élaborée par pulvérisation à l'azote d'un alliage liquide ayant la composition mentionnée ci-dessus et contenant donc approximativement 29% de cobalt.

D'autre part, les grains possédaient une forme sphéroïdale après pulvérisation à l'azote et refroidissement sous l'azote.

On a réalisé des dépôts à l'arc sous gaz inerte et sous flux en utilisant le fil fourré et on a effectué des essais sur ces dépôts, par exemple des essais de dureté. Les valeurs obtenues sont comprises entre 32 et 33 HRC en rechargement à une passe; 35 et 39 HRC rechargement à 2 passes; 40 et 42 HRC en rechargement à 3 passes.

Ces essais ont montré que les produits obtenus étaient d'une très grande qualité. D'autre part des analyses chimiques ont montré que le fil fourré possède une composition globale extrêmement précise et présente une grande homogénéité.

On voit sur cet exemple que l'une des caractéristiques nouvelles du fil fourré suivant l'invention est qu'il comporte une poudre pré-alliée constituant son âme, cette poudre apportant une partie du cobalt dans l'alliage déposé et permettant l'élaboration d'un alliage liquide qui peut être par la suite pulvérisé sous forme de particules.

D'autre part, pour l'obtention d'une nuance classique à base de cobalt avec une forte teneur en chrome et une teneur moyenne en tungstène, on a pu augmenter la proportion de poudre par rapport au poids total du fil fourré jusqu'à 50%.

Dans les fils fourrés de l'art antérieur, où une faible quantité de cobalt était apportée par la poudre pour le dépôt de la même nuance, il n'était pas possible d'obtenir des fils fourrés dont le poids de poudre représentait plus de 36% environ du poids total du fil.

Exemple 2

si l'on désire poursuivre le retréfilage du fil fourré jusqu'à de très faibles diamètres, il peut être avantageux cependant d'augmenter quelque peu l'épaisseur de la gaine pour éviter les ruptures de gaine, c'est-à-dire de diminuer le poids de la poudre relativement au poids de la gaine. Dans ce cas, il peut s'avérer nécessaire de modifier la composition de la poudre pour apporter par cette poudre, un peu moins de cobalt et plus de chrome.

On a donc élaboré, toujours dans le cas où l'on désire obtenir un fil fourré pour le dépôt d'un alliage proche de la STELLITE 6 (6 5 Co, 4W et 30 Cr), une poudre permettant l'utilisation d'une gaine tubulaire plus épaisse.

Pour élaborer cette poudre, on a pulvérisé à l'azote, un alliage liquide, de façon à obtenir une poudre de composition: 66,6% de chrome, 2,61% de carbone, 2,38% de silicium, 9,52% de tungstène et 18,89% de cobalt.

Au cours du formage de la gaine tubulaire (de même composition que dans l'exemple 1), on a introduit la poudre dans cette gaine tubulaire pour constituer l'âme du fil fourré, de façon que la poudre représente 42% en poids du fil fourré.

On a pu retréfiler l'ébauche du fil fourré constitué par la gaine tubulaire renfermant la poudre jusqu'à un diamètre inférieur à 1 mm sans rupture de gaine en cours de tréfilage.

Le taux de remplissage légèrement inférieur au taux de remplissage utilisé dans le cas de la technique décrite dans l'exemple 1 permettant d'utiliser des gaines d'une épaisseur légèrement plus importante a permis d'éviter toute rupture de gaine en cours de tréfilage. D'autre part, bien que l'alliage utilisé pour la fabrication de la poudre renferme une teneur en cobalt un peu inférieure à 20% et une teneur en chrome un peu supérieure à 65%, la poudre obtenue reste èlaborable par pulvérisation à partir de l'alliage liquide.

Les dépôts de métaux effectués avec ces fils fourrés de composition légèrement modifiée présentent d'autre part des qualités analogues aux dépôts effectués avec les fils fourrés de l'exemple 1.

Il est à remarquer que les dépôts obtenus contiennent dans tous les cas quelques pour cent de fer venant de l'enveloppe tubulaire qui comporte au maximum 7% de fer. Dans tous les cas la teneur obtenue dans les dépôts ne s'est pas montrée gênante et est restée bien inférieure à ce qu'elle est en utilisant les fils fourrés de la technique connue.

L'invention ne se limite pas aux modes de réalisation qui viennent d'être décrits, elle en comporte au contraire toutes les variantes.

C'est ainsi que l'on peut élaborer des fils fourrés suivant l'invention pour le dépôt d'alliages de cobalt correspondant à des nuances différentes des deux nuances qui ont été envisagées, ces alliages devant comporter cependant une teneur en chrome au plus égale à 36% environ.

Dans les exemples de réalisation qui ont été décrits, les poudres ont été préparées par pulvérisation à l'azote et refroidissement sous azote d'un pré-alliage liquide, cependant d'autres modes de pulvérisation peuvent être envisagés. On peut également imaginer d'autres modes du production de poudre ayant les compositions voulues à partir du moment où ces poudres sont homogènes quant à la composition des différents grains les constituant.

On a décrit certaines compositions particulières de la poudre, pour le dépôt d'alliages de cobalt utilisés couramment et on a vu que pour chacun de ces alliages, il est possible d'envisager des compositions différentes de la poudre avec des coefficients de remplissage différents.

Pour garder une possibilité d'élaboration de la poudre, il est cependant nécessaire de limiter la teneur en chrome de la poudre à 81% et de garder une teneur en cobalt supérieure à 12%.

Bien qu'il soit possible d'envisager toutes les combinaisons de compositions et de coefficients de remplissage, à l'intérieur des limites mentionnées, il est préférable d'utiliser pour la fabrication des fils fourrés pour le soudage et le rechargement des alliages de cobalt habituels, mentionnées dans les exemples, des compositions voisines de celles qui ont été données.

## Revendications

1. Fil fourré pour le soudage et le rechargement avec dépôt d'un alliage à base de cobalt contenant au plus 36% de chrome constitué d'une part d'une gaine en alliage ductile à teneur en cobalt supérieure à 90% et d'autre part d'une poudre métallique remplissant la gaine tubulaire caractérisé par le fait que la poudre métallique est intégralement formée de grains de composition homogène renfermant plus de 12% de cobalt et moins de 4,5% de carbone, moins de 3,5% de silicium, 55 à 81% de chrome, 0 à 20% de tungstène, 0 à 14% de molybdène et 0 à 8% de nickel et représente 41 à 50% du poids total du fil fourré, les éléments Cr, W, Mo et Ni n'entrant pas dans la composition de la gaine.

2. Fil fourré suivant la revendication 1, caractérisé par le fait que la poudre métallique renferme approximativement 57% de chrome, 9% de tungstène, 2,5% de silicium, 2,5% de carbone, 29% de cobalt et représente 50% du poids total du fil fourré.

3. Fil fourré suivant la revendication 1 caractérisé par le fait que la poudre métallique renferme environ 66,6% de chrome, 2,61% de carbone, 2,38% de silicium, 9,52% de tungstène et 18,89% de cobalt et représente 42% du poids total du fil fourré.

## Claims

1. A coated wire for welding and building up with a deposit of a cobalt-base alloy containing at most 36% of chromium, consisting firstly of a sheath of ductile alloy having a cobalt content higher than 90% and secondly of a metallic powder filling the tubular sheath, characterized by the fact that the metallic powder is entirely formed of grains of homogeneous composition containing more than 12% of cobalt and less than 4.5% of carbon, less than 3.5% of silicon, 55 to 81% of chromium, 0 to 20% of tungsten, 0 to 14% of molybdenum and 0 to 8% of nickel and represents 41 to 50% of the total weight of the coated wire, the elements Cr, W, Mo and Ni not entering into the composition of the sheath.

2. A coated wire as in Claim 1, characterized by the fact that the metallic powder contains approximately 57% of chromium, 9% of tungsten, 2.5% of silicon, 2.5% of carbon, 29% of cobalt and represents 50% of the total weight of the coated wire.

3. A coated wire as in Claim 1, characterized by the fact that the metallic powder contains about 66.6% of chromium, 2.61% of carbon, 2.38% of silicon, 9.52% of tungsten and 18.89% of cobalt and represents 42% of the total weight of the coated wire.

## Patentansprüche

1. Röhrchen-Draht zum Schweissen und Auftragsschweissen unter Ablagerung einer Legierung auf Basis von Kobalt mit einem Gehalt von höchstens 36% Chrom, der einerseits aus einer Hülle aus einer duktilen Legierung mit einem Kobalt-Gehalt von mehr als 90% und anderseits aus einem Metallpulver gebildet ist, das die rohrförmige Hülle ausfüllt, dadurch gekennzeichnet, dass das Metallpulver integral aus Körnern von homogener Zusammensetzung gebildet ist, welche mehr als 12% Kobalt und weniger als 4,5% Kohlenstoff, weniger als 3,5% Kohlenstoff, weniger als 3,5% Silizium, 55 bis 81% Chrom, 0 bis 20% Wolfram, 0 bis 14% Molybdän und 0 bis 8% Nickel umfasst und welche 41—50% des Gesamtgewichtes des Röhrchen-Drahtes ausmachen, wobei die Elemente Cr, W, Mo und Ni nicht in die Zusammensetzung der Hülle eingehen.

2. Röhrchen-Draht nach Anspruch 1, dadurch gekennzeichnet, dass das Metallpulver etwa 57% Chrom, 9% Wolfram, 2,5% Silizium, 2,5% Kohlenstoff und 29% Kobalt umfasst und 50% des Gesamtgewichtes des Röhrchen-Drahtes ausmacht.

3. Röhrchen-Draht nach Anspruch 1, dadurch gekennzeichnet, dass das Metallpulver etwa 66,6% Chrom, 2,61% Kohlenstoff, 2,38% Silizium, 9,92% Wolfram und 18,89% Kobalt umfasst und 42% des Gesamtgewichtes des Röhrchen-Drahtes ausmacht.